# EUROPÄISCHE PATENTSCHRIFT

(11) **EP 3 252 504 B1**
(45) Veröffentlichungstag und Bekanntmachung des Hinweises auf die Patenterteilung: **07.06.2023**
(21) Anmeldenummer: 16181033.8
(22) Anmeldetag: 25.07.2016
(51) Int. Cl.: G01S 5/00, G01S 19/49

(54) **VERFAHREN UND POSITIONSBESTIMMUNGSEINHEIT ZUR ERMITTLUNG EINER AKTUELLEN POSITION EINES EMPFÄNGERS**
METHOD, AND POSITION DETERMINATION UNIT FOR DETERMINING A CURRENT POSITION OF A RECEIVER
PROCEDE ET UNITE DE DETERMINATION D'UNE POSITION ACTUELLE D'UN RECEPTEUR

(30) Priorität: 03.06.2016 DE 102016209805
(43) Veröffentlichungstag der Anmeldung: 06.12.2017
(73) Patentinhaber: Siemens Aktiengesellschaft, 80333 München (DE)
(72) Erfinder: Falk, Rainer, 85586 Poing (DE)
(74) Vertreter: Siemens Patent Attorneys

(56) Entgegenhaltungen:
- EP-A1- 2 799 907
- EP-A1- 2 961 093
- US-A1- 2005 137 800
- JAKOB MAHLER HANSEN ET AL: "Nonlinear observer for INS aided by time-delayed GNSS measurements: Implementation and UAV experiments", 2015 INTERNATIONAL CONFERENCE ON UNMANNED AIRCRAFT SYSTEMS (ICUAS), 1. Juni 2015 (2015-06-01), Seiten 157-166, XP055409576, DOI: 10.1109/ICUAS.2015.7152287 ISBN: 978-1-4799-6010-1
- ABDELSALAM HEBA N ABU ET AL: "Assessment of Time Delays and Synchronization Errors in Real-time INS/GNSS Systems and its Impact on the Navigation Performance", GNSS 2012 - PROCEEDINGS OF THE 25TH INTERNATIONAL TECHNICAL MEETING OF THE SATELLITE DIVISION OF THE INSTITUTE OF NAVIGATION (ION GNSS 2012), THE INSTITUTE OF NAVIGATION, 8551 RIXLEW LANE SUITE 360 MANASSAS, VA 20109, USA, 21. September 2012 (2012-09-21), Seiten 3192-3197, XP056008601,

## Beschreibung

Die Erfindung betrifft ein Verfahren, eine Positionsbestimmungseinheit, einen Empfänger sowie ein Computerprogrammprodukt zur Ermittlung einer aktuellen Position eines Empfängers, der Empfangssignale eines Satellitennavigationssystems empfängt und Inertialnavigationsdaten bereitstellt.

Zur Ermittlung einer aktuellen Position sind Navigationssatellitensysteme bekannt, bei denen durch Empfang von Signalen von Navigationssatelliten eine genaue Position bestimmt werden kann. Dazu teilen die Navigationssatelliten über Funkcodes ihre genaue Position und Uhrzeit mit. Zur Positionsund Zeitbestimmung muss ein Empfänger im Allgemeinen die Signale von mindestens vier Satelliten gleichzeitig empfangen. Im Empfangsgerät werden die Signallaufzeiten gemessen und daraus die aktuelle Position und ein Uhrenfehler des Empfängers ermittelt. Zur Funkübertragung werden Spreizcodes, welche eine Frequenzspreizung eines Nachrichtensignals bewirken, verwendet. Durch diese breitbandige Übertragung weist ein solches Signal eine hohe Robustheit gegenüber Störungen auf. Zur Spreizung werden pseudo-zufällige Codefolgen, sogenannte Pseudozufallsrauschcodes oder Pseudo-Number-Codes, kurz PRN-Codes, verwendet. Ein Empfänger kann das ausgestrahlte Signal erst durch Korrelation mit einem ihm selbst vorliegenden passenden beziehungsweise identischen PRN-Code decodieren. Man kann bei einem solchen identischen PRN-Code auch von einem Replika-Pseudozufallsrauschcode sprechen, welcher ein rekonstruierter oder nachgebildeter oder als zweite Ausführung vorliegender PRN-Code ist. Bei den Empfangssignalen kann es sich allgemein auch um ein Zeitsynchronisationssignal, um ein Peilungssignal oder um ein allgemeines Datenübertragungssignal handeln.

Es ist weiterhin bekannt, kryptographische PRN-Codes zu verwenden. Ein solcher kryptographischer PRN-Code wird abhängig von einem kryptographischen Schlüssel erzeugt. Ein Empfänger kann ein solches Signal nur decodieren, wenn er den zur Aussendung verwendeten PRN-Code kennt, das heißt rekonstruieren kann. Dazu benötigt er den dabei verwendeten kryptographischen Schlüssel.

Ein kryptographischer PRN-Code stellt aber, wie auch der zu dessen Erzeugung generierte kryptographische Schlüssel, eine sensitive, zu schützende Information dar. Daher muss die Signalverarbeitungseinheit entsprechend geschützt werden. Schutzmaßnahmen wie beispielsweise ein Abstrahlschutz, die Verwendung von Bohrschutzfolien oder ein Vergießen der Einheiten in Epoxidharz sind jedoch äußerst aufwändig.

Es ist weiterhin aus der EP 2 961 093 A1 eine Bereitstellungseinheit für Replika-Pseudozufallsrauschcodes bekannt, der nur eingeschränkt PRN-Codes bereitstellt. Es kann dabei beispielsweise nur ein PRN-Code für einen bestimmten Satelliten und für einen bestimmten Zeitabschnitt bereitgestellt werden. Der Zeitabschnitt kann insbesondere in der Vergangenheit liegen, das heißt, wenn eine vorgebbare Zeitdauer seit dem Ausstrahlen des Satellitennavigationssignals mit diesem PRN-Code bereits verstrichen ist.

Auch die Aufbereitung des Empfangssignals ist zeit- und rechenintensiv. Eine zentrale Operation des Empfängers ist die Korrelation eines digitalisierten Basisband-Empfangssignals mit dem rekonstruierten PRN-Code. Bei der Korrelation kann insbesondere ein Zeitversatz ermittelt werden, der zur Entfernungsschätzung zu einem Satelliten verwendet wird. Diese Korrelation ist rechenaufwändig und wird im Allgemeinen in Hardware wie beispielsweise in speicherprogrammierbaren Bausteinen wie FPGAs oder ASICs, oder gegebenenfalls durch einen digitalen Signalprozessor DSP realisiert.

Es ist des Weiteren ein GPS Empfänger bekannt, der Rohdaten eines Empfangssignals digitalisiert und aufzeichnet. Diese digitalisierten Rohdaten, auch Snippets genannt, werden zu einem Cloud-Dienst übertragen, um dort die aufwändige Signalverarbeitung und Positionsbestimmung durchzuführen. Ein solcher Architekturansatz ist beispielsweise in der EP 2 799 907 für sicherheitskritische kryptographische Signalverarbeitung in einem sicheren Rechenzentrum für einen kryptographisch geschützten Galileo-Dienst beschrieben.

Es sind weiterhin so genannte Inertialnavigationssysteme bekannt, bei denen mittels Inertialsensoren, wie beispielsweise einem Gyroskop, Wegstreckensensor, Raddrehsensor, Beschleunigungssensor, Lenkwinkelsensor oder Magnetfeldsensor, ausgehend von einem Startpunkt eine Wegstrecke und daraus eine Position ermittelt wird. Durch eine unvermeidliche Drift der Sensoren nimmt die Positionsgenauigkeit mit zunehmender Zeit ab. Daher wird zur Kalibrierung oder Korrektur eines Inertialnavigationssystems eine Kombination aus Inertialnavigationsdaten mit Satellitennavigationssignalen verwendet.

Durch die beschriebene zeitlich verzögerte Bereitstellung des Replika-Pseudozufallsrauschcodes und/oder die ausgelagerte Signalverarbeitung kommt es zu einer zeitlich verzögerten Signalauswertung und somit kann nicht die aktuelle Position, sondern lediglich die Position zur tatsächlichen Empfangszeit des Satellitensignals ermittelt werden.

Aus Jakob Mahler Hansen et al. "Nonlinear observer for INS aided by time-delayed GNSS measurements: Implementation and UAV experiments" 2015 INTERNATIONAL CONFERENCE ON UNMANNED AIRCRAFT SYSTEMS (ICUAS), 2015-06-01, Seiten 157-166, XP055409576, DOI:10.1109/ICUAS.2015.7152287, ISBN: 978-1-4799-6010-1 ist ein Verfahren zum Schätzen einer Position eines Empfängers in einem integrierten Satelliten- und Inertialnavigationssystem mittels eines nichtlinearen Beobachters bekannt, um Positionsungenauigkeiten aufgrund von Signallaufzeiten zu verringern. Es werden die Trägheitsmessungen zeitlich mit den Positionsmessungen des Satellitennavigationssystems synchronisiert. Die aktuelle Position des Empfängers wird durch einen schnellen Simulator bestimmt, wobei die Daten der Trägheitsmessungen ausgehend von den verzögerten Schätzungen des Inertialnavigationssystems integriert werden.

Es ist somit die Aufgabe der vorliegenden Erfindung, einen kostengünstig realisierbaren Empfänger von Satellitennavigationssignalen, die beispielsweise mit einem kryptographischen PRN-Code moduliert sind, bereitzustellen und insbesondere nicht nur verzögert die Position des Empfängers, sondern eine genaue aktuelle Position des Empfängers ermittelt zu können.

Diese Aufgabe wird durch die unabhängigen Ansprüche gelöst. Vorteilhafte Weiterbildungen sind in den abhängigen Ansprüchen angegeben.

Das erfindungsgemäße Verfahren zur Ermittlung einer aktuellen Position eines Empfängers, der Empfangssignale eines Satellitennavigationssystems empfängt und Inertialnavigationsdaten bereitstellt, umfasst die nachfolgend beschriebenen Verfahrensschritte.

Ein Speichern einer zeitlichen Folge von Inertialnavigationsdaten, die den Empfangssignalen des Satellitennavigationssystems zeitlich zuordenbar sind, ein verzögertes Bereitstellen eines einer bestimmten Empfangszeit zugeordneten, decodierten, digitalisierten Empfangssignals des Satellitennavigationssystems, ein Ermitteln einer Positionsinformation des Empfängers zur zeitlich zurückliegenden Empfangszeit unter Verwendung des decodierten Empfangssignals des Satellitennavigationssystems zur Empfangszeit, und ein Ermitteln einer aktuellen Position des Empfängers aus der ermittelten Positionsinformation zur Empfangszeit und den mindestens seit der Empfangszeit bereitgestellten Inertialnavigationsdaten.

In diesem Verfahren wird somit durch die zeitverzögerte Bereitstellung der decodierten Satellitennavigationssignale die Position bzw. eine zur Bestimmung der Position geeignete Positionsinformation wie z.B. Pseudoranges, Signallaufzeitschätzungen oder Entfernungsschätzungen des Empfängers zu einem zurückliegenden Zeitpunkt sehr genau bzw. sehr verlässlich ermittelt. Durch die seit der Empfangszeit ermittelten und gespeicherten Inertialnavigationsdaten kann daraus die aktuelle Position mit sehr hoher Genauigkeit bzw. sehr hoher Verlässlichkeit geschätzt werden. Empfangssignale eines Satellitennavigationssystems sind beispielsweise breitbandige Signale, die über insbesondere kryptographische PRN-Codes gespreizt sind. Inertialnavigationsdaten sind Daten, die beispielsweise durch Inertialsensoren eines Inertialnavigationssystems, auch als Trägheitsnavigationssystem bezeichnet, ermittelt wurden. Inertialnavigationsdaten können aber auch durch einen oder mehrere physikalische Inertialsensoren bereitgestellt werden. Ebenso können Inertialnavigationsdaten durch einen virtuellen Inertialsensor bereitgestellt werden. So können Inertialnavigationsdaten z.B. abhängig von einer geplanten Bewegungstrajektorie eines Fahrzeugführungssystems oder Steuergrößen eines Antriebs oder Steuergrößen einer Fahrzeugführungsfunktion, z.B. eines autonomen Fahrzeugs, oder aus von einem weiteren Navigationssystem bzw. Navigationsdienst abgeleiteten Bewegungsdaten durch eine entsprechende Signalverarbeitung gebildet bzw. berechnet werden.

Neben den Inertialnavigationsdaten können auch digitalisierte Empfangssignale bis zu einer Bereitstellung von beispielsweise Replika-Pseudozufallsrauschcodes zwischengespeichert werden und nach Empfang beispielsweise des PRN-Codes in decodierte digitalisierte Empfangscodes verarbeitet werden. Alternativ können die digitalisierten Empfangssignale an eine externe Einheit weitergeleitet werden, in der die decodierten digitalisierten Empfangssignale ermittelt und beispielsweise anschließend in den Empfänger zurückübertragen werden.

In beiden Fällen werden die decodierten digitalisierten Empfangssignale, die einer bestimmten Empfangszeit zugeordnet sind, erst verzögert zur Ermittlung der Position bereit gestellt. Die Position des Empfängers zur zeitlich zurückliegenden Empfangszeit kann dann aus dem decodierten digitalisierten Empfangssignal ermittelt werden. Die Ermittlung der aktuellen Position kann durch unterschiedliche Verfahren, wie beispielsweise durch Extrapolation, auf kontinuierlich vorliegende Inertialnavigationsdaten oder auch in bestimmten zeitlichen Abständen vorliegenden Inertialnavigationsdaten berechnet werden. Bevorzugter Weise wird dazu ein Kalman-Filter verwendet. Es können jedoch auch andere Prädiktionsverfahren bzw. Schätzverfahren verwendet werden. So kann z.B. auch eine Schätzung mittels eines neuronalen Netzes oder unter Verwendung eines physikalischen Modells des dem Empfänger zugeordneten Objekts, z.B. einem Fahrzeug, erfolgen.

Im Verfahren wird das decodierte digitale Empfangssignal durch eine Korrelation eines digitalisierten Empfangssignals mit einem Replika-Pseudozufallsrauschcode, die jeweils der Empfangszeit zugeordnet sind, ermittelt und nach einer Verzögerungszeit bereit gestellt. Dabei wird insbesondere der Replika-Pseudozufallsrauschcode zeitverzögert bereitgestellt sodass die Korrelation des digitalisierten Empfangssignals und die Bereitstellung des decodierten digitalen Empfangssignals zeitverzögert erfolgen.

Die Replika-Pseudozufallsrauschcodes sind oftmals zum Schutz der Übertragung der Satellitensignale erst nach ihrer tatsächlichen Verwendung verfügbar.

In einer vorteilhaften Ausführungsform werden den Inertialnavigationsdaten und den Empfangssignalen jeweils ein Zähler und/oder eine Zeitinformation zugeordnet, die zur zeitlichen Zuordnung der Initialnavigationsdaten zu den Empfangsdaten verwendet werden.

So kann beispielsweise die Empfangszeit des Empfangssignals nicht nur dem Empfangssignal selbst, sondern auch den Inertialnavigationsdaten, die zu diesem Zeitpunkt bereit gestellt werden, zugeordnet werden. In vereinfachter Form kann den Inertialnavigationsdaten sowie Empfangssignaldaten, die zu einer Empfangszeit ermittelt wurden, ein gleicher Zählerwert oder voneinander abhängige beziehungsweise einander zugeordnete Zählerwerte zugeordnet werden.

In einer vorteilhaften Ausführungsform ist einem Replika-Pseudozufallsrauschcode eine Zeitinformation zugeordnet, über die das zugehörige digitalisierte Empfangssignal erkannt wird.

In einer vorteilhaften Ausführungsform wird der zeitliche Bezug zwischen Replika-Pseudozufallsrauschcode und zugehörigem digitalisierten Empfangssignal durch eine Anfragenachricht zur Bereitstellung des Replika-Pseudozufallsrauschcodes angezeigt.

Somit ist eine exakte Zuordnung zwischen Empfangssignal und PRN-Code auch bei längeren Verzögerungszeiten möglich.

In einer vorteilhaften Ausführungsform werden Rohdaten oder vorverarbeitete Daten von Inertialsensoren im Empfänger als Inertialnavigationsdaten bereit gestellt.

Rohdaten werden üblicherweise als Eingangsdaten für einen Kalman-Filter verwendet. Bei vorverarbeiteten Daten kann es sich beispielsweise um ermittelte Bewegungstrajektorien handeln, die über weniger komplexe weitere Rechenschritte zur Extrapolation der aktuellen Position verwendet werden können.

In einer vorteilhaften Ausführungsform werden digitalisierte Empfangssignale lediglich für vorgebbare Zeitpunkte oder für vorgebbare Zeiträume bereitgestellt.

Dies spart Speicherplatz im Vergleich zu einer ebenfalls möglichen kontinuierlichen Ermittlung und Speicherung von digitalisierten Empfangssignalen.

In einer vorteilhaften Ausführungsform wird der Replika-Pseudozufallsrauschcode im Empfänger von einer externen Bereitstellungseinheit empfangen.

Dies hat den Vorteil, dass lediglich eine externe Bereitstellungseinheit besonders gegen Manipulation und Zugriff geschützt werden muss und somit der Empfänger kostengünstiger bereitgestellt werden kann.

In einer vorteilhaften Ausführungsform werden die Inertialnavigationsdaten und die digitalisierten Empfangssignale an eine externe Positionseinheit zur Ermittlung der Position zur Empfangszeit übermittelt.

Entsprechend findet eine Korrelation der digitalisierten Empfangssignale mit den verzögert bereit gestellten Replika-Pseudozufallsrauschcodes sowie die nachfolgende Positionsbestimmung mittels Kombination der Satellitennavigationsdaten mit den Inertialnavigationsdaten außerhalb des Empfängers statt. Der Empfänger benötigt somit weniger Rechenkapazität, weniger Speicherkapazität. Des Weiteren sind keine Schutzmaßnahmen zum Schutz von sicherheitskritischen Daten, wie beispielsweise der kryptographische Schlüssel, zur Ermittlung des Replika-Pseudozufallsrauschcodes erforderlich. Ein solcher Empfänger kann kostengünstig bereitgestellt werden.

In einer vorteilhaften Ausführungsform werden als vorverarbeitete Daten Bewegungstrajektorien des Empfängers verwendet, die auf ermittelten Inertialnavigationsdaten basieren, verwendet.

Damit ist es insbesondere möglich mit geringem Zusatzaufwand die aktuelle Position des Empfängers, das heißt die Position des Empfängers zur gerade aktuellen Zeit, und auch die Position des Empfängers in der nahen Zukunft mit guter Genauigkeit vorherzusagen.

Die erfindungsgemäße Positionsbestimmungseinheit zur Ermittlung einer bestimmten Position eines Empfängers umfasst eine Inertialnavigationsdateneinheit, die derart ausgebildet ist, eine zeitliche Folge von Inertialnavigationsdaten einer Inertialsensoreinheit zu speichern, eine Signaleinheit, die derart ausgebildet ist, ein einer bestimmten Empfangszeit zugeordnetes decodiertes digitalisiertes Empfangssignal des Satellitennavigationssystems zeitlich verzögert bereitzustellen, und eine Positionseinheit, die derart ausgebildet ist, eine Position des Empfängers zur zeitlich zurückliegenden Empfangszeit unter Verwendung des decodierten Empfangssignals des Satellitennavigationssystems zur Empfangszeit zu ermitteln, und eine aktuelle Position des Empfängers aus der ermittelten Position des Empfängers zur Empfangszeit und den seit der Empfangszeit bereit gestellten Inertialnavigationsdaten zu ermitteln.

Eine derartige Positionsbestimmungseinheit ist nun trotz erst verzögert bereit gestellter decodierter Empfangssignale in der Lage die Position des Empfängers zur aktuellen Zeit, mit guter Genauigkeit bereitzustellen.

Die Positionsbestimmungseinheit umfasst eine Bereitstellungseinheit, die einen Replika-Pseudozufallsrauschcode bereitstellt und eine Korrelationseinheit, die das decodierte digitale Empfangssignal durch eine Korrelation eines digitalisierten Empfangssignals mit einem Replika-Pseudozufallsrauschcode, die jeweils der Empfangszeit zugeordnet sind, ermittelt und nach einer Verzögerungszeit der Positionseinheit bereitstellt.

Durch diese Einheiten ist sichergestellt, dass Daten, in diesem Fall der Replika-Pseudozufallsrauschcode und das digitalisierte Empfangssignal zeitlich einander zugeordnet werden können.

In einer vorteilhaften Ausführungsform übermittelt die Signaleinheit der Inertialnavigationsdateneinheit zur zeitlichen Zuordnung der Inertialnavigationsdaten zu den Empfangssignalen eine Zeitinformation.

Dies ermöglicht eine genaue zeitliche Synchronisation beziehungsweise Zuordnung zwischen Empfangssignal und Navigationsdaten.

In einer vorteilhaften Ausführungsform ist die Positionsbestimmungseinheit in einem Empfänger mit einer Empfangseinheit für Satellitennavigationssignale und mit einer Inertialsensoreinheit zur Ermittlung von Inertialnavigationsdaten ausgebildet.

Dadurch ist der Empfänger autark und kann ohne eine Datenkommunikation zu einer externen Einheit, wie z.B. einem Server, eigenständig seine genaue Position ermitteln. Des Weiteren fallen keine Übertragungszeiten an, die zu einer weiteren verzögerten Bereitstellung der aktuellen Position beitragen würden. Die Zeit bis zur Bereitstellung der aktuellen Position wird neben der verzögerten Bereitstellung des PRN-Codes nur durch die interne Rechenzeit in der Positionsbestimmungseinheit im Empfänger bestimmt.

In einer Variante sind die Bereitstellungseinheit und/oder die Korrelationseinheit und/oder die Positionseinheit mit einer vom Empfänger physisch getrennten Berechnungseinheit ausgebildet.

Durch die Auslagerung der einen oder mehreren genannten Einheiten wird die Rechenlast im Empfänger verringert. Zusätzlich sind bei Auslagerung der Bereitstellungseinheit keine oder zumindest geringere Schutzmaßnahmen im Empfänger notwendig. Durch eine höhere Rechenkapazität in einer physisch getrennten, also externen Berechnungseinheit, kann zudem die Berechnungsdauer optimiert werden. Dies ist insbesondere für die Verarbeitung der Inertialnavigationsdaten mit doppelter Integration und der Zusammenführung mit dem Empfangssignal beispielsweise mittels eines Kalman-Filters signifikant.

Des Weiteren wird ein Empfänger beansprucht, der eine Positionsbestimmungseinheit umfasst.

Des Weiteren wird eine Computerprogrammprodukt beansprucht, das direkt in einen Speicher mindestens eines digitalen Mikroprozessors ladbar ist und Programmcodeteile umfasst, die dazu geeignet sind, die genannten Schritte des Verfahrens durchzuführen.

Ausführungsbeispiele des erfindungsgemäßen Verfahrens sowie der erfindungsgemäßen Positionsbestimmungseinheit sind in den Zeichnungen beispielhaft dargestellt und werden anhand der nachfolgenden Beschreibung näher erläutert. Es zeigen:
- Figur 1: ein Ausführungsbeispiel des erfindungsgemäßen Verfahrens als Ablaufdiagramm;
- Figur 2: ein Schaubild zur Verdeutlichung der zeitlichen Verfügbarkeit von Inertialnavigationsdaten, von Empfangssignalen und der berechneten Positionen in schematischer Darstellung;
- Figur 3: ein erstes Ausführungsbeispiel einer erfindungsgemäßen Positionsbestimmungseinheit integriert in einen Empfänger in Blockdarstellung;
- Figur 4: ein zweites Ausführungsbeispiel einer erfindungsgemäßen Positionsbestimmungseinheit mit einer abgesetzten Bereitstellungseinheit für Replika-Pseudozufallsspreizcodes in Blockdarstellung und
- Figur 5: ein drittes Ausführungsbeispiel eines Empfängers mit einer erfindungsgemäßen Positionsbestimmungseinheit mit ausgelagerter Bereitstellungs- und Positionseinheit in Blockdarstellung.

Einander entsprechende Teile sind in allen Figuren mit den gleichen Bezugszeichen versehen.

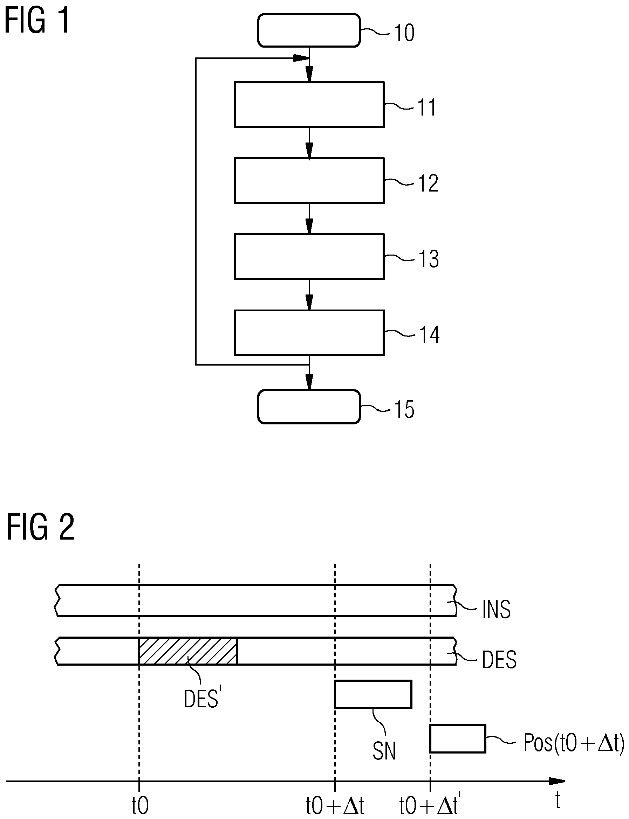

In einem Satellitennavigationssystem sendet ein Satellit Nachrichtensignale, die zur Funkübertragung mittels einer Folge von Pseudozufallsrauschcodes, im Weiteren auch abgekürzt als PRN-Codes bezeichnet, in der Frequenz gespreizt werden. Durch diese breitbandige Übertragung weist ein solches Signal eine hohe Robustheit gegenüber Störungen auf. Anhand des aufmodulierten PRN-Codes kann ein Empfänger die Laufzeit des Signals und damit eine Entfernungsinformation ermitteln. Wenn zumindest vier Signale von verschiedenen Satelliten empfangen werden, kann der Empfänger seine Position und die Zeit ermitteln. Ein Empfänger kann auch nur die Zeit ermitteln. Dafür genügt dann das Signal eines Satelliten. Der Signalfluss und die Signalverarbeitung erfolgen dabei kontinuierlich, so dass fortlaufend ein Empfangssignal digitalisiert und bearbeitet wird, siehe in Figur 2 das digitalisierte Signal DES. Zur Bestimmung der Laufzeit des Signals muss das digitalisierte Signal DES im Empfänger mit einem ihm selbst vorliegenden passenden PRN-Code decodiert werden. Ein solcher passender PRN-Code ist in der Regel identisch mit dem im Satelliten verwendeten PRN-Code und wird somit häufig als Replika-Pseudo-Zufallsrauschcode-Code oder im Weiteren auch kurz PRN-Code bezeichnet.

Zum Schutz vor Manipulation der Satellitensignale werden kryptographische PRN-Codes verwendet, die abhängig von einem kryptographischen Schlüssel erzeugt werden. Diese kryptographischen PRN-Codes werden häufig nur zeitverzögert bereitgestellt. Der Empfänger kann daher erst mit einem gewissen Zeitversatz Δt seine Position Pos(t0+Δt)bestimmen. Dazu muss der Empfänger das Empfangssignal des Satellitennavigationssystems, beispielsweise ein digitalisiertes Basisbandsignal DES zwischenspeichern.

Ein Empfänger kann des Weiteren Inertialsensoren umfassen, über die ausgehend von einem Startpunkt die Wegstrecke des Empfängers ermittelt wird. Die Daten solcher Inertialsensoren werden im Weiteren Inertialnavigationsdaten INS genannt. Diese werden ebenfalls kontinuierlich ermittelt und gespeichert.

In Figur 1 ist der Ablauf zur Ermittlung der aktuellen Position eines Empfängers dargestellt. Das Verfahren beginnt in dem Ausgangszustand 10, in dem wie eben beschrieben beispielsweise kontinuierlich Inertialnavigationsdaten INS und Empfangssignale empfangen und digitalisiert werden. In Verfahrensschritt 11 wird nun eine zeitliche Folge von Inertialnavigationsdaten, die den Empfangssignalen des Satellitennavigationssystems zeitlich zuordenbar sind, gespeichert und bereitgestellt. Die Inertialnavigationsdaten INS der Inertialsensoren werden beispielsweise als INS-Rohdaten abgespeichert. Auch können Bewegungstrajektorien, die aus den INS-Rohdaten geschätzt werden, zwischengespeichert werden.

Vorteilhafterweise werden die bereits digitalisierten Empfangssignale DES gespeichert. Zur zeitlichen Zuordnung von digitalisiertem Empfangssignal DES und Inertialnavigationsdaten INS kann beispielsweise bei der Basisbandverarbeitung dem Empfangssignal ein Zähler oder ein Zeitstempel von der Inertialnavigationsdateneinheit bereitgestellt werden, sodass dem digitaliserten Empfangssignal und den zeitlich entsprechenden Inertialnavigationsdaten der gleiche Zähler zugeordnet ist. Optional kann beispielsweise auch die Basisbandverarbeitung des Empfangssignals den Zähler an die Inertialnavigationsdateneinheit bereitstellen. Üblicherweise verfügt ein Empfänger auch über eine Echtzeituhr, die eine exakte Zeit oder eine Systemzeit als Referenz bereitstellen kann.

Sobald zeitlich verzögert ein PRN-Code verfügbar ist, wird das digitalisierte Empfangssignal mit dem zugehörigen PRN-Code decodiert und in Verfahrensschritt 12 bereitgestellt.

Aus dem decodierten digitalisierten Empfangssignal kann nun die Laufzeit des Signals bestimmt und die Position des Empfängers ermittelt werden, an der der Empfänger zur Empfangszeit t0 des Empfangssignals sich befunden hat, siehe Verfahrensschritt 13. Da zwischen dem Empfangszeitpunkt t0 und dem Bereitstellen der decodierten digitalisierten Empfangssignale SN ein Zeitversatz Δt von einigem Millisekunden bis zu Sekunden oder auch Minuten liegen kann, weicht die aktuelle Position des Empfängers, d.h. die Position des Empfängers zum Zeitpunkt t0+Δt, teilweise erheblich von der ermittelten Position zur Empfangszeit t0 ab. Im Verfahrensschritt 14 wird nun die aktuelle Position des Empfängers aus der ermittelten Position des Empfängers zur Empfangszeit t0 und den ab der Empfangszeit zwischengespeicherten und bereitgestellten Inertialnavigationsdaten INS ermittelt. Vorzugsweise wird dazu ein Kalman-Filter verwendet. Bei Empfang von vier Satelliten im Empfänger kann neben der Position auch die Geschwindigkeit und die Zeit des Empfängers ermittelt werden.

Die Empfangssignale können kontinuierlich zwischengespeichert werden oder aber zu vorgebbaren Zeitpunkten oder auch für vorgebbare Zeitabschnitte gespeichert beziehungsweise bereitgestellt werden. Dies ist insbesondere dann vorteilhaft, wenn die PRN-Codes nur für bestimmte Zeitabschnitte bereitgestellt werden. Eine Positionsbestimmung kann lediglich für diese Zeitpunkte oder Zeitabschnitte bestimmt werden. Somit kann der Stromverbrauch und der Speicherbedarf in einem Empfänger beziehungsweise in einer entsprechenden Positionsbestimmungseinheit verringert werden. Die Positionsbestimmung wird üblicherweise kontinuierlich wiederholt und ist in Figur 1 durch den Pfeil zum Verfahrensschritt 11 dargestellt ist.

In Figur 2 ist die zeitliche Verfügbarkeit der verschiedenen Signale beziehungsweise Daten schematisch dargestellt. Der Pfeil symbolisiert die Zeitachse, zu der Daten vorliegen. Die Inertialnavigationsdaten INS sowie die digitalisierten Empfangssignale DES werden kontinuierlich ermittelt und zwischengespeichert. Mit kontinuierlich ist dabei auch die Ermittlung der entsprechenden Daten und Signale in regelmäßigen zeitlichen Abständen zu verstehen. Die Empfangssignale können speicheroptimiert auch lediglich innerhalb vorbestimmter Zeitintervalle oder zu vorbestimmten Zeitpunkten zwischengespeichert werden. Ein decodiertes Empfangssignal SN, aus dem die Laufzeit und auch weitere Information im Signal ermittelt werden kann, liegt erst zu einem Zeitpunkt t0+Δt vor, der zeitlich im Millisekundenbereich, aber auch im Sekunden- oder Minutenbereich nach der eigentlichen Empfangszeit des Empfangssignals liegen. Die aktuelle Position Pos(t0+Δt) liegt einschließlich einer internen Bearbeitungszeit um den Zeitversatz Δt' nach der Empfangszeit t0 vor. Die ermittelte Position gibt somit eine Schätzung der Empfängerposition zur Zeit t0+Δt an.

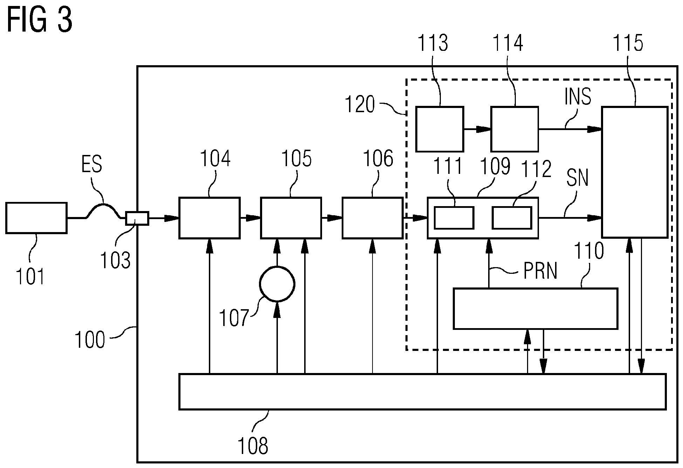

Figur 3 zeigt ein Blockschaltbild mit den wesentlichen Funktionsblöcken eines ersten Ausführungsbeispiels eines erfindungsgemäßen Empfängers 100. Der Empfänger 100 weist eine Antennenbuchse 103 auf, mittels welcher eine Antenne 101 angeschlossen werden kann. Ein von der Antenne 101 bereitgestelltes Empfangssignal ES, hier insbesondere ein mit einem Pseudo-Zufallsrauschcode gespreiztes breitbandiges Signal, wird zunächst von einer Hochfrequenzbaugruppe 104, einem so genannten Radio Frequency Front End, bearbeitet. Dabei findet eine Filterung und Verstärkung statt. Danach wird das Signal einem Down-Converter 105 bereitgestellt, der das Signal mit einem Signal eines lokalen Oszillators 107 mischt und somit eine Down-Conversion durchführt. Das Signal wird dann einem Analog-Digital-Wandler 106 übergeben. Dieser leitet das digitalisierte Signal an eine Signaleinheit 109 zur Basisbandverarbeitung weiter. Der Empfänger wird dabei von einer Steuerungseinheit 108 gesteuert. Diese konfiguriert die einzelnen Baugruppen, beispielsweise um ein passendes Frequenzband zu wählen oder beispielsweise um einen Eingangsfilter der Hochfrequenzgruppe 104 zu konfigurieren. Die Basisbandverarbeitung in der Signaleinheit 109 ist typischerweise auf einem Field Programmable Gate Array Baustein, kurz FPGR, realisiert. Der Basisbandverarbeitung in der Signaleinheit 109 wird durch eine Bereitstellungseinheit 110 ein kryptographischer Replika-Pseudozufallsrauschcode oder auch ein nichtkryptographischer Replika-Pseudozufallsrauschcode PRN bereitgestellt. In einem Signalspeicher 111 in der Signaleinheit 109 werden die beispielsweise die digitalisierten Empfangssignale zwischengespeichert. Die Signaleinheit 109 ist als Empfänger für Replika-Pseudozufallsrauschcodes PRN ausgebildet und enthält einen Korrelator 112 für die Korrelation eines beispielsweise zwischengespeicherten digitalen Empfangssignals mit einem Replika-Pseudozufallsrauschcode.

Eine Bereitstellungseinheit 110 prüft beispielsweise, ob ein bestimmter PRN-Code ausgegeben werden darf. Auch wenn die Bereitstellungseinheit 110 technisch in der Lage ist, einen bestimmten PRN-Code zu erzeugen, so erfolgt eine Prüfung, ob dies zulässig ist. Insbesondere kann die Bereitstellungseinheit 110 einen einem Zeitpunkt des Empfangssignals zuordenbaren PRN-Code erst nach einer zeitlichen Schutzperiode ausgeben.

Die Steuerungseinheit 108 überträgt dazu ein Kommando an die Bereitstellungseinheit 110, einen bestimmten PRN-Code zu erzeugen und der Signaleinheit 109 bereitzustellen. Der PRN-Code PRN ist insbesondere durch eine Kennung des sendenden Satelliten und einen Startzeitpunkt bestimmt. Abhängig von der Prüfung stellt die Bereitstellungseinheit 110 den von der Steuerungseinheit 108 angeforderten PRN-Code PRN der Signaleinheit 109 bereit. Der Steuerungseinheit 108 wird davon abhängig ein OK-Signal oder ein Error-Signal bereitgestellt. In einer nicht dargestellten Variante verfügt die Bereitstellungseinheit 110 über eine interne Zeitinformation, beispielsweise aus einer Echtzeituhr des Empfängers oder über die Speicherung der bisher angefragten Startzeitpunkte. Die Bereitstellungseinheit kann diese interne Zeitinformation verwenden um die bereitgestellten PRN-Codes zu beschränken. Sie stellt insbesondere sicher, dass nur ein PRN-Code bereitgestellt wird, der bereits eine vorgebbare Mindestzeitdauer bezüglich der internen Zeitinformation der Bereitstellungseinheit zurückliegt.

Anhand der Zeitinformation, die die Bereitstellungseinheit 110 dem PRN-Code PRN zugeordnet hat, kann nun das digitalisierte Empfangssignal DES der zugehörigen Empfangszeit aus dem Signalspeicher 111 für digitalisierte Empfangssignale ermittelt unter Verwendung des PRN-Code durch den Korrelator 112 decodiert werden.

Weiterhin verfügt der Empfänger 100 über eine Inertialsensoreinheit 113. Die Daten der Inertialsensoreinheit 113 werden in einer Inertialnavigationsdateneinheit 114 gespeichert. Die Speicherinhalte des Signalspeichers 111 und der Inertialnavigationsdateneinheit 114 sind zeitlich zuordenbar. Dazu stellt in diesem Beispiel die Einheit 109 der Inertialnavigationsdateneinheit 114 eine Information, beispielsweise einen Zähler oder einen Zeitstempel, bereit. Der Empfänger 100 verfügt über eine Echtzeituhr, beispielsweise eine Chip-Scale Atomic Clock, über die die Empfangszeit des Empfangssignals mit dem Ermittlungszeitpunkt der Inertialsensordaten gekennzeichnet und somit zuordenbar ist. Die Positionseinheit 115 empfängt die Inertialnavigationsdaten INS ab dem zurückliegenden Empfangszeitpunkt t0 und das decodierte Empfangssignal SN. Daraus schätzt die Positionseinheit 115 die Position für einen nachfolgenden Zeitpunkt t0+Δt, insbesondere für den aktuellen Zeitpunkt t0+Δt'.

Die Positionseinheit 115 kann bei einer Realisierung auch auf einer zentralen Prozessoreinheit als Software realisiert sein. Die Inertialsensoreinheit 113 kann beispielsweise als mikroelektromechanisches System, auch MEMS, ausgebildet sein. Solche Systeme sind mittlerweile klein, leicht und preiswert verfügbar.

Die Positionsbestimmungseinheit 120 umfasst im dargestellten Ausführungsbeispiel die Inertialsensoreinheit 113, die Inertialnavigationsdateneinheit 114, die Signaleinheit 109 mit dem Signalspeicher 111 und dem Korrelator 112, die Bereitstellungseinheit 110 sowie die Positionseinheit 115, siehe die gestrichelt umrandeten Einheiten in Figur 3. Die Positionsbestimmungseinheit 120 ist in diesem Ausführungsbeispiel vollständig im Empfänger 100 angeordnet beziehungsweise in den Empfänger integriert.

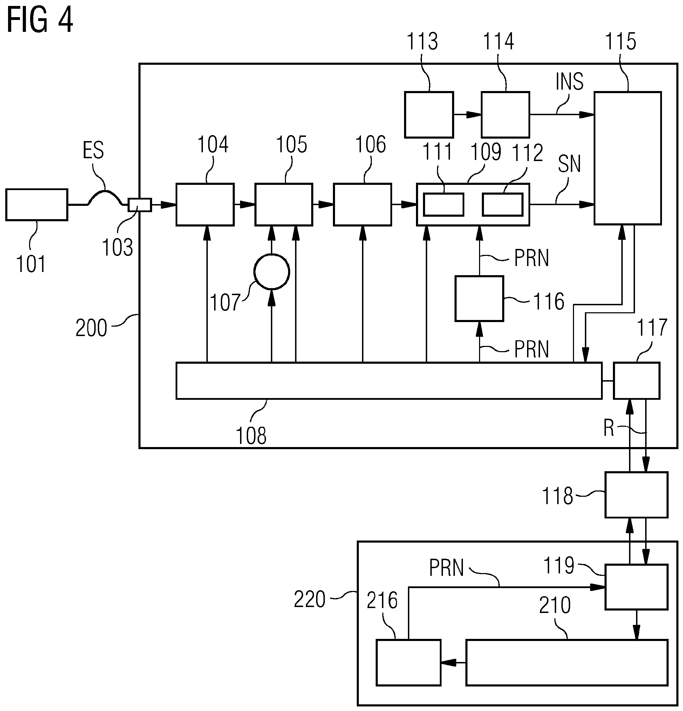

Figur 4 zeigt nun einen Empfänger 200 mit einer physisch separierten, abgesetzten Bereitstellungseinheit 210 unter Verwendung eines Cloud-Offload-Servers, hier konkret eines PRN-Code-Servers. Über eine erste Netzwerkschnittstelle 117 des Empfängers 200 wird über ein Netzwerk 118 eine Anfrage R an den PRN-Server 220 geschickt. In eine Zulassungsprüfung kann eine Identifizierungsinformation des Empfängers 200, welche mittels der Anfrage R übermittelt wird, eingehen. Der PRN-Server 220 empfängt die Anfrage über eine Netzwerkschnittstelle 119 und leitet diese an die Bereitstellungseinheit 210 weiter, die den PRN-Code direkt oder über eine Anweisung an einen PRN-Codespeicher 216 bereitstellt und über die Netzwerkschnittstelle 119, das Netzwerk 118 an die Netzwerkschnittstelle 117 des Empfängers 200 weitergibt. Der PRN-Code PRN wird in der dargestellten Realisierung über die Steuerungseinheit 108 an einen PRN-Codespeicher 116 im Empfänger 200 weitergegeben und von dort der Signaleinheit 109 bereitgestellt.

Die Positionsbestimmungseinheit ist in dieser Variante verteilt im Empfänger 200 sowie im PRN-Codeserver 220 angeordnet.

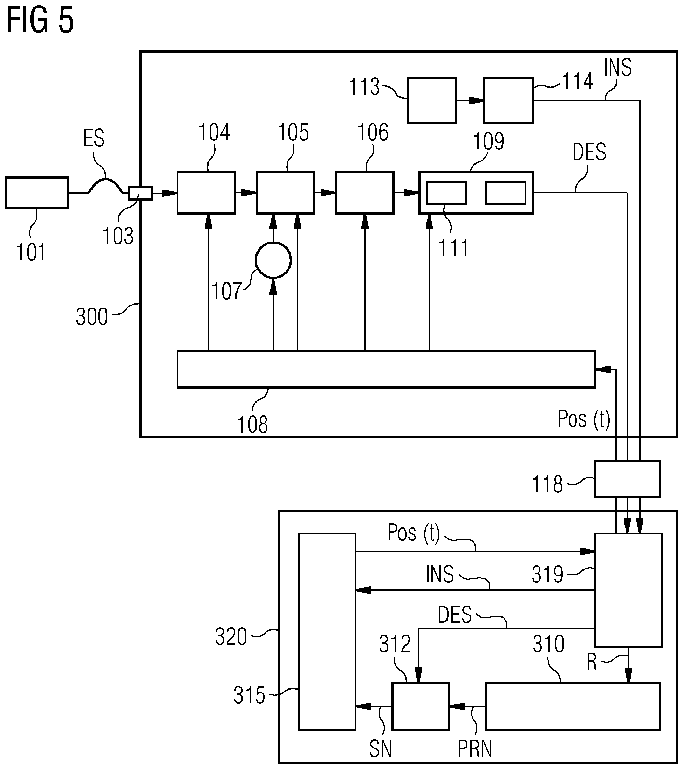

In Figur 5 ist eine weitere Ausführungsvariante einer Positionsbestimmungseinheit dargestellt, bei der lediglich die Inertialsensoreinheit 113, die Inertialnavigationsdateneinheit 114 sowie die Signaleinheit 109 in einem Empfänger 300 angeordnet sind. Die Positionseinheit 315 ist auf einer separaten Einheit, beispielsweise einem als Cloud-Offload Server ausgebildeten Positionsserver 320 angeordnet. In diesem Ausführungsbeispiel wird das decodierte Empfangssignal DES sowie die Inertialnavigationsdaten INS über eine nicht dargestellte Netzwerkschnittstelle des Empfängers 300 und ein Netzwerk 118 an eine Netzwerkschnittstelle 319 des Positionsservers 320 übermittelt. Zusätzlich wird die Anfrage R für einen PRN-Code wie in Figur 4 zur Bereitstellung eines zugehörigen PRN-Codes übermittelt. Diese Anfrage ist der Übersichtlichkeit halber nur innerhalb des Positionsservers 320 eingezeichnet. Auf Anfrage R stellt die Bereitstellungseinheit 310 den entsprechenden PRN-Code bereit und übermittelt diesen an einen im Positionsserver 320 angeordneten Korrelator 312. Der Korrelator 312 erhält über die Netzwerkschnittstelle 319 das digitalisierte Empfangssignal DES und korreliert dieses mit von der Bereitstellungseinheit 310 bereitgestellten PRN-Code PRN. Das resultierende decodierte Empfangssignal SN wird der Positionseinheit 315 bereitgestellt. Die Inertialnavigationsdaten INS werden der Positionseinheit 315 über die Netzwerkschnittstelle 319 bereitgestellt.

Die Inertialnavigationsdaten INS können einen weiteren Zeitbereich abdecken als das digitalisierte Empfangssignal. Beispielsweise können Inertialsensordaten für den Zeitabschnitt zwischen t0 und Δt in Figur 2 bereitgestellt werden. Das Empfangssignal DES' kann lediglich für einen kürzeren Zeitabschnitt gegeben sein. Es muss lediglich gewährleistet sein, dass Inertialnavigationsdaten INS ab dem Empfangszeitpunkt t0 des Empfangssignals möglichst zum aktuellen Zeitpunkt t0+Δt vorliegen. Die Inertialnavigationsdaten INS können kontinuierlich vom Empfänger 300 an den Positionsserver 320 übermittelt werden.

Die Positionseinheit 315 im Positionsserver 320 berechnet nun die aktuelle Position Pos(t0+Δt) und leitete diese über die Netzwerkschnittstelle 319 und das Netzwerk 318 an den Empfänger 300, hier beispielsweise an die Steuerungseinheit 108, weiter. Von dort wird die Position beispielsweise an eine Weiterverarbeitungseinheit weitergegeben.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computer-implementiertes Verfahren zur Ermittlung einer aktuellen Position eines Empfängers, der Empfangssignale eines Satellitennavigationssystems empfängt und Inertialnavigationsdaten bereitstellt mit den Verfahrensschritten:
- Speichern und Bereitstellen (11) einer zeitlichen Folge von Inertialnavigationsdaten, die den Empfangssignalen des Satellitennavigationssystems zeitlich zuordenbar sind,
- verzögertes Bereitstellen (12) eines einer bestimmten Empfangszeit zugeordneten decodierten digitalisierten Empfangssignals, sobald zeitlich verzögert ein Replika-PseudoZufallsrauschcode nach einer vorgebbaren Mindestzeitdauer verfügbar ist, wobei das decodierte digitale Empfangssignal durch eine Korrelation eines digitalisierten Empfangssignals mit dem Replika-Pseudo-Zufallsrauschcode, die jeweils der Empfangszeit (t0) zugeordnet sind, ermittelt und nach einer Verzögerungszeit bereitgestellt wird,
- Ermitteln einer Positionsinformation des Empfängers (13) zur zeitlich zurückliegenden Empfangszeit unter Verwendung des decodierten Empfangssignals zur Empfangszeit, und
- Ermitteln einer aktuellen Position (14) des Empfängers aus der ermittelten Positionsinformation des Empfängers zur Empfangszeit und den mindestens ab der Empfangszeit bereitgestellten Inertialnavigationsdaten.

2. Verfahren nach Anspruch 1, wobei den Inertialnavigationsdaten und den Empfangssignalen jeweils ein Zähler und/oder eine Zeitinformation zugeordnet werden, die zur zeitlichen Zuordnung der Inertialnavigationsdaten zu den Empfangssignalen verwendet werden.

3. Verfahren nach einem der vorhergehenden Ansprüche, wobei einem Replika-Pseudo-Zufallsrauschcode eine Zeitinformation zugeordnet ist über die das zugehörige digitalisierte Empfangssignal erkannt wird.

4. Verfahren nach einem der vorhergehenden Ansprüche, wobei der zeitliche Bezug zwischen Replika-Pseudo-Zufallsrauschcode und zugehörigem digitalisiertem Empfangssignal durch eine Anfrage zur Bereitstellung des Replika-Pseudo-Zufallsrauschcode angezeigt wird.

5. Verfahren nach einem der vorhergehenden Ansprüche, wobei Rohdaten oder vorverarbeitete Daten von Inertialsensoren im Empfänger als Inertialnavigationsdaten bereitgesellt werden.

6. Verfahren nach Anspruch 5, wobei als vorverarbeitete Daten auf ermittelte Inertialnavigationsdaten basierende geschätzte Bewegungstrajektorien des Empfängers verwendet werden.

7. Verfahren nach einem der vorhergehenden Ansprüche, wobei digitalisierte Empfangssignale lediglich für vorgebbare Zeitpunkte oder für vorgebbare Zeiträume bereitgestellt werden.

8. Verfahren nach einem der vorhergehenden Ansprüche, wobei der Replika-Pseudo-Zufallsrauschcode im Empfänger von einer externen Bereitstellungseinheit empfangen wird.

9. Verfahren nach einem der vorhergehenden Ansprüche, wobei die Inertialnavigationsdaten (INS) und die digitalisierten Empfangssignale (DES) an eine externe Positionseinheit (315) zur Ermittlung der Position zur Empfangszeit übermittelt werden.

10. Positionsbestimmungseinheit (120) zur Ermittlung einer aktuellen Position eines Empfängers (100) mit einem Satellitennavigationssystem umfassend eine
- Inertialnavigationsdateneinheit (114), die derart ausgebildet ist eine zeitliche Folge von Inertialnavigationsdaten einer Inertialsensoreinheit (113) zu speichern,
- eine Signaleinheit (109), die derart ausgebildet ist ein einer bestimmten Empfangszeit zugeordnetes decodiertes digitalisiertes Empfangssignal (SN) des Satellitennavigationssystems zeitlich verzögert bereitzustellen, und
- eine Positionseinheit (115), die derart ausgebildet ist, eine Positionsinformation des Empfängers (100) zur zeitlich zurückliegenden Empfangszeit (t0) unter Verwendung des decodierten Empfangssignals (SN) des Satellitennavigationssystems zur Empfangszeit zu ermitteln, und
eine aktuelle Position des Empfängers aus der ermittelten Positionsinformation des Empfängers zur Empfangszeit und den mindestens ab der Empfangszeit bereitgestellten Inertialnavigationsdaten zu ermitteln
- eine Bereitstellungseinheit (110, 210), die derart ausgebildet ist, einen Replika-Pseudo-Zufallsrauschcode nach einer vorgebbaren Mindestzeitdauer bereitzustellen
und
- eine Korrelationseinheit (112), die derart ausgebildet ist, das decodierte digitale Empfangssignal (SN), sobald zeitlich verzögert der Replika-Pseudo-Zufallsrauschcode verfügbar ist, durch eine Korrelation eines digitalisierten Empfangssignals (DES) mit einem Replika-Pseudo-Zufallsrauschcode (PRN), die jeweils der Empfangszeit (t0) zugeordnet sind, zu ermitteln und nach einer Verzögerungszeit der Positionseinheit (115) bereitzustellen.

11. Positionsbestimmungseinheit nach Anspruch 10, wobei die Signaleinheit (109) der Inertial-navigationsdateneinheit (114) zur zeitlichen Zuordnung der Inertialnavigationsdaten (INS) zu den Empfangssignalen eine Zeitinformation übermittelt.

12. Positionsbestimmungseinheit nach Anspruch 10 oder 11, wobei die Positionsbestimmungseinheit (120) in einem Empfänger (100) mit einer Empfangseinheit für Satellitennavigationssignale und mit einer Inertialsensoreinheit (113) zur Ermittlung von Inertialnavigationsdaten ausgebildet ist.

13. Positionsbestimmungseinheit nach einem der Ansprüche 10 bis12, wobei die Bereitstellungseinheit (210, 310) und/oder die Korrelationseinheit (312) und/oder die Positionseinheit (315) auf einer vom Empfänger physisch getrennten Berechnungseinheit (220, 320) ausgebildet sind.

14. Empfänger umfassend eine Positionsbestimmungseinheit nach einem der Ansprüche 10 bis 13, wobei die Positionsbestimmungseinheit derart ausgebildet ist das Verfahren gemäß den Ansprüchen 1 bis 9 auszuführen.

15. Computerprogrammprodukt, das direkt in einen Speicher mindestens eines digitalen Mikroprozessors ladbar ist, umfassend Programmcodeteile, die bei der Ausführung des Programms durch den Mikroprozessor diesen veranlassen, die Schritte des Verfahrens nach einem der Ansprüche 1 bis 9 durchzuführen.

## Claims

1. Computer-implemented method for ascertaining a current position of a receiver that receives reception signals of a satellite navigation system and provides inertial navigation data, comprising the following method steps:
- storing and providing (11) a temporal sequence of inertial navigation data that are able to be temporally assigned to the reception signals of the satellite navigation system,
- providing (12), with a delay, a decoded digitized reception signal assigned to a specific reception time as soon as a replica pseudorandom noise code is available with a time delay following a predefinable minimum duration, wherein the decoded digital reception signal is ascertained by correlating a digitized reception signal with the replica pseudorandom noise code, which are each assigned to the reception time (t0), and is provided following a delay time,
- ascertaining position information of the receiver (13) at the temporally previous reception time using the decoded reception signal at the reception time, and
- ascertaining a current position (14) of the receiver from the ascertained position information of the receiver at the reception time and the inertial navigation data provided at least from the reception time.

2. Method according to Claim 1, wherein the inertial navigation data and the reception signals are each assigned a counter and/or time information used to temporally assign the inertial navigation data to the reception signals.

3. Method according to either of the preceding claims, wherein a replica pseudorandom noise code is assigned time information using which the associated digitized reception signal is recognized.

4. Method according to one of the preceding claims, wherein the temporal relationship between replica pseudorandom noise code and associated digitized reception signal is indicated by a request to provide the replica pseudorandom noise code.

5. Method according to one of the preceding claims, wherein raw data or pre-processed data from inertial sensors are provided as inertial navigation data in the receiver.

6. Method according to Claim 5, wherein estimated motion trajectories of the receiver that are based on ascertained inertial navigation data are used as pre-processed data.

7. Method according to one of the preceding claims, wherein digitized reception signals are provided only for predefinable times or for predefinable time intervals.

8. Method according to one of the preceding claims, wherein the replica pseudorandom noise code in the receiver is received from an external provision unit.

9. Method according to one of the preceding claims, wherein the inertial navigation data (INS) and the digitized reception signals (DES) are transmitted to an external position unit (315) in order to ascertain the position at the reception time.

10. Position determination unit (120) for ascertaining a current position of a receiver (100) using a satellite navigation system, comprising
- an inertial navigation data unit (114) that is designed to store a temporal sequence of inertial navigation data of an inertial sensor unit (113);
- a signal unit (109) that is designed to provide a decoded digitized reception signal (SN) of the satellite navigation system, assigned to a specific reception time, with a time delay, and
- a position unit (115) that is designed to ascertain position information of the receiver (100) at the temporally previous reception time (t0) using the decoded reception signal (SN) of the satellite navigation system at the reception time, and
to ascertain a current position of the receiver from the ascertained position information of the receiver at the reception time and the inertial navigation data provided at least from the reception time,
- a provision unit (110, 210) that is designed to provide a replica pseudorandom noise code following a predefinable minimum duration
and
- a correlation unit (112) that is designed to ascertain the decoded digital reception signal (SN), as soon as the replica pseudorandom noise code is available with a time delay, by correlating a digitized reception signal (DES) with a replica pseudorandom noise code (PRN), which are each assigned to the reception time (t0), and to provide said decoded digital reception signal to the position unit (115) following a delay time.

11. Position determination unit according to Claim 10, wherein the signal unit (109) of the inertial navigation data unit (114) transmits time information in order to temporally assign the inertial navigation data (INS) to the reception signals.

12. Position determination unit according to Claim 10 or 11, wherein the position determination unit (120) is formed in a receiver (100) having a reception unit for satellite navigation signals and having an inertial sensor unit (113) for ascertaining inertial navigation data.

13. Position determination unit according to one of Claims 10 to 12, wherein the provision unit (210, 310) and/or the correlation unit (312) and/or the position unit (315) are formed on a computing unit (220, 320) physically separate from the receiver.

14. Receiver comprising a position determination unit according to one of Claims 10 to 13, wherein the position determination unit is designed to carry out the method according to Claims 1 to 9.

15. Computer program product able to be loaded directly into a memory of at least one digital microprocessor and comprising program code portions that, when the program is executed by the microprocessor, prompt said microprocessor to perform the steps of the method according to one of Claims 1 to 9.

## Revendications

1. Procédé mis en œuvre par ordinateur et permettant de déterminer la position actuelle d'un récepteur recevant des signaux de réception d'un système de navigation par satellite et fournissant des données de navigation inertielle, comprenant les étapes consistant à :
- stocker et fournir (11) une séquence temporelle de données de navigation inertielle pouvant être temporellement associées dans le temps aux signaux de réception du système de navigation par satellite,
- fournir (12) de manière retardée un signal de réception numérisé décodé associé à un temps de réception déterminé, dès qu'un code de bruit pseudo-aléatoire de réplique est disponible de manière temporellement retardée après une durée minimale pouvant être prédéfinie, dans lequel le signal de réception numérique décodé est déterminé par corrélation d'un signal de réception numérisé avec le code de bruit pseudo-aléatoire de réplique, lesquels étant respectivement associés au temps de réception (t0), et est fourni après un temps de retard,
- déterminer une information de position du récepteur (13) par rapport au temps de réception écoulé en utilisant le signal de réception décodé par rapport au temps de réception, et
- déterminer une position actuelle (14) du récepteur à partir des informations de position déterminées du récepteur par rapport à l'heure de réception et par rapport aux données de navigation inertielle fournies au moins à partir de l'heure de réception.

2. Procédé selon la revendication 1, dans lequel un compteur et/ou une information de temps utilisé(s) pour l'association temporelle des données de navigation inertielle aux signaux de réception est/sont respectivement associé(s) aux données de navigation inertielle et aux signaux de réception.

3. Procédé selon l'une quelconque des revendications précédentes, dans lequel une information temporelle, par l'intermédiaire de laquelle le signal de réception numérisé associé est identifié, est associée à un code de bruit pseudo-aléatoire de réplique.

4. Procédé selon l'une quelconque des revendications précédentes, dans lequel la relation temporelle entre le code de bruit pseudo-aléatoire de réplique et le signal de réception numérisé associé est indiquée par une demande de fourniture du code de bruit pseudo-aléatoire de réplique.

5. Procédé selon l'une quelconque des revendications précédentes, dans lequel des données brutes ou des données prétraitées de capteurs inertiels sont fournies au récepteur sous forme de données de navigation inertielle.

6. Procédé selon la revendication 5, dans lequel des trajectoires de mouvement estimées du récepteur fondées sur des données de navigation inertielle déterminées sont utilisées en tant que données prétraitées.

7. Procédé selon l'une quelconque des revendications précédentes, dans lequel des signaux de réception numérisés ne sont fournis que pour des instants ou des périodes de temps pouvant être prédéfini(e)s.

8. Procédé selon l'une quelconque des revendications précédentes, dans lequel le code de bruit pseudo-aléatoire de réplique est réceptionné dans le récepteur par une unité de fourniture externe.

9. Procédé selon l'une quelconque des revendications précédentes, dans lequel les données de navigation inertielle (INS) et les signaux de réception numérisés (DES) sont transmis à une unité de position externe (315) permettant de déterminer la position par rapport au temps de réception.

10. Unité de détermination de position (120) permettant de déterminer une position actuelle d'un récepteur (100) avec un système de navigation par satellite, comprenant :
- une unité de données de navigation inertielle (114) conçue afin de stocker une séquence temporelle de données de navigation inertielle d'une unité de détection inertielle (113),
- une unité de signalisation (109) conçue afin de fournir de manière temporellement retardée un signal de réception numérisé décodé (SN), associé à un temps de réception déterminé, du système de navigation par satellite, et
- une unité de position (115) conçue afin de déterminer une information de position du récepteur (100) par rapport au temps de réception (t0) écoulé en utilisant le signal de réception décodé (SN) du système de navigation par satellite par rapport au temps de réception, et conçue afin de déterminer une position actuelle du récepteur à partir de l'information de position déterminée du récepteur par rapport au temps de réception et à partir des données de navigation inertielle fournies au moins à partir du temps de réception,
- une unité de fourniture (110, 210) conçue afin de fournir un code de bruit pseudo-aléatoire de réplique après une durée minimale pouvant être prédéfinie, et
- une unité de corrélation (112) conçue afin de déterminer le signal de réception numérique décodé (SN) dès que le code de bruit pseudo-aléatoire de réplique est disponible de manière temporellement retardée, par corrélation d'un signal de réception numérisé (DES) avec un code de bruit pseudo-aléatoire de réplique (PRN), lesquels étant respectivement associés au temps de réception (t0), et afin de le fournir à l'unité de position (115) après un temps de retard.

11. Unité de détermination de position selon la revendication 10, dans laquelle l'unité de signalisation (109) transmet une information de temps à l'unité de données de navigation inertielle (114) afin d'associer temporellement les données de navigation inertielle (INS) aux signaux de réception.

12. Unité de détermination de position selon la revendication 10 ou 11, dans laquelle l'unité de détermination de position (120) est formée au sein d'un récepteur (100) comprenant une unité de réception de signaux de navigation par satellite et une unité de détection inertielle (113) permettant de déterminer des données de navigation inertielle.

13. Unité de détermination de position selon l'une quelconque des revendications 10 à 12, dans laquelle l'unité de fourniture (210, 310) et/ou l'unité de corrélation (312) et/ou l'unité de position (315) est/sont formée(s) sur une unité de calcul (220, 320) séparée physiquement du récepteur.

14. Récepteur comprenant une unité de détermination de position selon l'une quelconque des revendications 10 à 13, dans lequel l'unité de détermination de position est formée de manière à mettre en œuvre le procédé selon les revendications 1 à 9.

15. Produit-programme informatique pouvant être chargé directement dans une mémoire d'au moins un microprocesseur numérique, comprenant des parties de code de programme conduisant à la mise en œuvre des étapes du procédé selon l'une quelconque des revendications 1 à 9 lorsque le programme est exécuté par le microprocesseur.
